# EUROPÄISCHE PATENTSCHRIFT

(11) **EP 1 087 143 B1**
(45) Veröffentlichungstag und Bekanntmachung des Hinweises auf die Patenterteilung: **01.12.2004**
(21) Anmeldenummer: 00120160.7
(22) Anmeldetag: 21.09.2000
(51) Int. Cl.: F04D 13/14, F04D 13/08

(54) **Tauchpumpe**
Submersible pump
Pompe submersible

(30) Priorität: 24.09.1999 DE 29916897 U
(43) Veröffentlichungstag der Anmeldung: 28.03.2001
(73) Patentinhaber: Reich KG, Regel- und Sicherheitstechnik, 35713 Eschenburg-Wissenbach (DE)
(72) Erfinder: Bender, Steffen, 35745 Herborn (DE)
(74) Vertreter: Hofstetter, Alfons J., Dr.rer.nat.

(56) Entgegenhaltungen:
- DE-A- 2 824 523
- FR-A- 2 019 894
- GB-A- 2 023 731
- US-A- 3 602 611

## Beschreibung

Die vorliegende Erfindung betrifft eine elektrisch betriebene Tauchpumpe mit einem Gehäuse, wobei innerhalb des Gehäuses mindestens zwei, miteinander kommunizierende Pumpenstufen ausgebildet sind, wobei jede Pumpenstufe einen Antriebsmotor aufweist, der jeweils ein entsprechendes Flügelrad antreibt und die Antriebsmotoren nebeneinander innerhalb des Gehäuses angeordnet sind, wobei die Tauchpumpe eine Ansaugöffnung für eine Flüssigkeit im Bereich der ersten Pumpenstufe und einen Flüssigkeitsaustritt an dem der Ansaugöffnung gegenüberliegenden Ende des Gehäuses aufweist.

Eine derartige Tauchpumpe ist in der US-A-3 602 611 vorbeschrieben. Auch die DE-A-28 24 523 beschreibt eine zweistufige Kreiselpumpe, die insbesondere für die Wasserförderung in Wohnwagen eingesetzt wird und aus zwei einstufigen, für sich getrennt angetriebenen Laufrädern besteht, wobei eine direkte strömungsgünstige Verbindung von der Druckseite der zuerst durchlaufenen Pumpe zu der Saugseite der zweiten Pumpe ausgebildet ist.

Anwendung finden derartige Tauchpumpen insbesondere in Versorgungs- und Wassersystemen für Caravans, Reisemobile, Boote oder anderen, entsprechend klein dimensionierten Armaturen.

Nachteilig an den bekannten Tauchpumpen ist jedoch, daß oftmals nicht der zur sicheren und zuverlässigen Förderung von Flüssigkeiten erforderliche Druck aufgebaut werden kann. Insbesondere in Fällen, wo das Flüssigkeitsreservoir mit der Tauchpumpe weit von dem Flüssigkeitsauslaß, d. h. der Armatur, entfernt ist, kommt es in diesem Bereich zu Problemen, da in diesen Anwendungsbereichen die Tauchpumpen nicht beliebig groß dimensioniert ausgebildet sein können.

Es ist daher Aufgabe der vorliegenden Erfindung, eine Tauchpumpe der eingangs genannten Art bereitzustellen, die einen genügend hohen Förderdruck für Flüssigkeiten gewährleistet und zudem möglich klein dimensioniert ausgebildet ist.

Gelöst wird diese Aufgabe durch eine Tauchpumpe gemäß den Merkmalen des Anspruches 1.

Vorteilhafte Ausgestaltungen sind in den Unteransprüchen beschrieben.

Bei einer erfindungsgemäßen Tauchpumpe sind innerhalb eines Gehäuses mindestens zwei, miteinander kommunizierende Pumpenstufen ausgebildet, wobei jede Pumpenstufe einen Antriebsmotor aufweist, der jeweils ein entsprechendes Flügelrad antreibt und die Antriebsmotoren nebeneinander innerhalb des Gehäuses angeordnet sind. Zudem weist die Tauchpumpe eine Ansaugöffnung für eine Flüssigkeit im Bereich der ersten Pumpenstufe und einen Flüssigkeitsaustritt an dem der Ansaugöffnung gegenüberliegenden Ende des Gehäuses auf. Zwischen den Pumpenstufen und zwischen den Antriebsmotoren ist erfindungsgemäß ein Flüssigkeitskanal parallel zu den Antriebsachsen der Flügelräder ausgebildet ist, der in den Flüssigkeitsaustritt mündet. Durch eine derartige erfindungsgemäße zweistufige Tauchpumpe ist gewährleistet, daß jederzeit genügend Druck auf die Flüssigkeit, die zu transportieren ist, ausgeübt wird. Dabei sorgt die erste Pumpenstufe für den genügenden Anfangsdruck, der durch die zweite Pumpenstufe dann verstärkt wird. Durch die Anordnung der Pumpenstufen und der Ausgestaltung und Anordnung des Flüssigkeitskanals ist es möglich, die erfindungsgemäße Tauchpumpe vorteilhafterweise klein dimensioniert zu halten.

In einer vorteilhaften Ausgestaltung der Erfindung sind die Antriebsmotoren versetzt nebeneinander angeordnet. Dadurch ist es möglich, das Volumen der zu transportierenden Flüssigkeit zu variieren, da die beiden Pumpenstufen beziehungsweise die beiden Antriebsmotoren innerhalb des Gehäuses unterschiedliche Freiräume für die Flüssigkeit schaffen.

In einer weiteren vorteilhaften Ausgestaltung der erfindungsgemäßen Tauchpumpe sind die Antriebsmotoren unabhängig voneinander schaltbar ausgebildet. Dadurch ist es möglich, beide Pumpenstufen gleichzeitig oder auch separat, je nach den entsprechenden Anforderungen, zu betreiben.

Weitere Einzelheiten, Merkmale und Vorteile der Erfindung ergeben sich aus der nachfolgenden Beschreibung eines zeichnerisch dargestellten Ausführungsbeispiels. Es zeigen:
- Figur 1: eine schematische Schnittdarstellung der erfindungsgemäßen Tauchpumpe;
- Figur 2: eine schematisch dargestellte Aufsicht auf die erfindungsgemäße Tauchpumpe; und
- Figur 3: eine schematisch dargestellte Ansicht von unten auf die erfindungsgemäße Tauchpumpe.

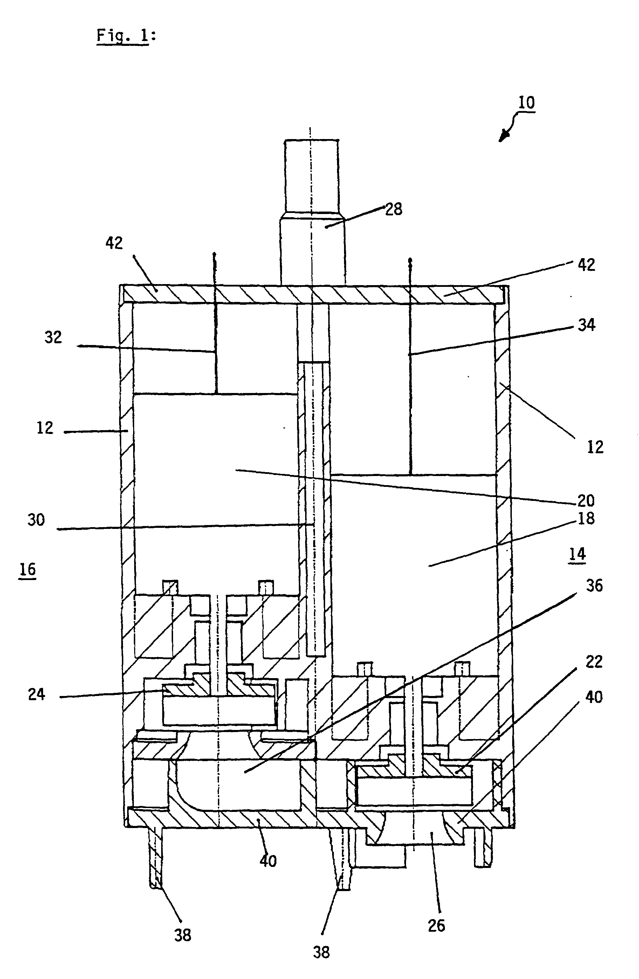

Figur 1 zeigt eine elektrisch betriebene Tauchpumpe 10 mit einem Gehäuse 12. Man erkennt, daß innerhalb des Gehäuses 12 zwei, miteinander kommunizierende, d. h. in Flüssigkeitsverbindung stehende, Pumpenstufen 14, 16 ausgebildet sind. Jede Pumpenstufe 14, 16 weist dabei einen Antriebsmotor 18, 20 auf, der jeweils über eine Welle ein entsprechendes Flügelrad 22, 24 antreibt. Des weiteren erkennt man, daß die Antriebsmotoren 18, 20 nebeneinander und versetzt innerhalb des Gehäuses 12 angeordnet sind.

Die erste Pumpenstufe 14 ist über einer im Gehäuseboden 40 angeordneten Ansaugöffnung 26 angeordnet. Über die Ansaugöffnung 26 wird die zu befördernde Flüssigkeit angesaugt und in den Raum 36 unterhalb der Antriebsmotoren 18, 20 befördert. Der von den beiden Pumpenstufen 14, 16 ausgeübte Förderdruck erhöht den Gesamtdruck beziehungsweise Gesamtförderdruck des Systems. Die zu transportierende Flüssigkeit steigt dann über einen Flüssigkeitskanal 30 zu einem im Gehäusedeckel 42 ausgebildeten Flüssigkeitsaustritt 28. Man erkennt, daß der Flüssigkeitskanal zwischen den Pumpenstufen 14, 16 ausgebildet ist. Dabei ist er in dem Ausführungsbeispiel seitlich nach hinten versetzt.

Üblicherweise erfolgt der Betrieb der Tauchpumpe mit 12 V D.C.. Die Antriebsmotoren 18, 20 sind daher über elektrische Leitungen 32, 34 mit einer entsprechenden Energiequelle verbunden.

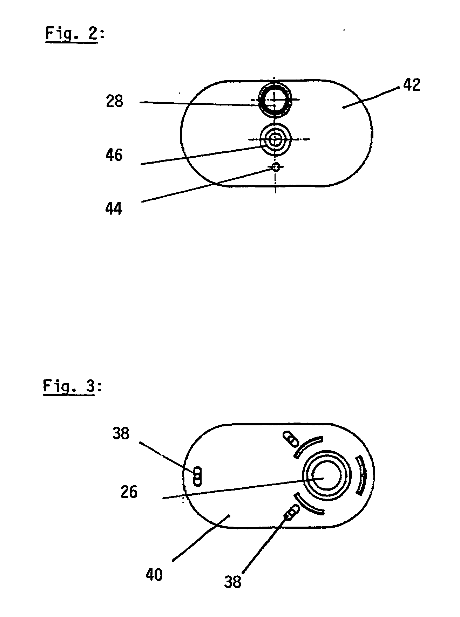

Figur 2 zeigt eine Aufsicht auf die Tauchpumpe 10. Man erkennt, daß im Deckel 42 ein mittig und nach hinten versetzter Flüssigkeitsaustritt 28, eine Kabeldurchführung 46 und eine Entlüftungsöffnung 44 ausgebildet sind.

Figur 3 zeigt eine schematische Ansicht der Tauchpumpe 10 von unten. Man erkennt, daß an der Außenseite des Gehäusebodens Abstandshalter 38 angeordnet sind (vgl. auch Figur 1). Des weiteren erkennt man die Anordnung der Ansaugöffnung 26.

## Patentansprüche

1. Elektrisch betriebene Tauchpumpe mit einem Gehäuse, wobei innerhalb des Gehäuses (12) mindestens zwei, miteinander kommunizierende Pumpenstufen (14, 16) ausgebildet sind, wobei jede Pumpenstufe (14, 16) einen Antriebsmotor (18, 20) aufweist, der jeweils ein entsprechendes Flügelrad (22, 24) antreibt und die Antriebsmotoren (18, 20) nebeneinander innerhalb des Gehäuses (12) angeordnet sind, wobei die Tauchpumpe (10) eine Ansaugöffnung (26) für eine Flüssigkeit im Bereich der ersten Pumpenstufe (16) und einen Flüssigkeitsaustritt (28) an dem der Ansaugöffnung (26) gegenüberliegenden Ende des Gehäuses (12) aufweist,
**dadurch gekennzeichnet,**
**dass** zwischen den Pumpenstufen (14, 16) und zwischen den Antriebsmotoren (18, 20) ein Flüssigkeitskanal (30) parallel zu den Antriebsachsen der Flügelräder (22, 24) ausgebildet ist, der in den Flüssigkeitsaustritt (28) mündet.

2. Elektrisch betriebene Tauchpumpe nach Anspruch 1,
**dadurch gekennzeichnet,**
**dass** die Antriebsmotoren (18, 20) versetzt nebeneinander angeordnet sind.

3. Elektrisch betriebene Tauchpumpe nach Anspruch 1 oder 2,
**dadurch gekennzeichnet,**
**dass** die Antriebsmotoren (18, 20) unabhängig voneinander schaltbar ausgebildet sind.

## Claims

1. Electrically operated submersible pump having a housing, at least two pump stages (14, 16) communicating with each other being formed within the housing (12), wherein each pump stage (14, 16) has a drive motor (18, 20), which each drives a corresponding impeller (22, 24), and the drive motors (18, 20) are disposed side by side within the housing (12), wherein the submersible pump (10) has a suction port (26) for a liquid in the region of the first pump stage (16) and a liquid exhaust (28) at the end of the housing (12) opposing the suction port (26),
**characterized in that**
between the pump stages (14, 16) and between the drive motors (18, 20), a liquid channel (30) is formed parallel to the drive axes of the impellers (22, 24), which opens into the liquid exhaust (28).

2. Electrically operated submersible pump according to claim 1,
**characterized in that**
the drive motors (18, 20) are disposed offset side by side.

3. Electrically operated submersible pump according to claim 1 or 2,
**characterized in that**
the drive motors (18, 20) are formed switchable independently of each other.

## Revendications

1. Pompe électrique submersible comportant un carter, pour laquelle, à l'intérieur du carter (12), au moins deux étages de pompe (14, 16) communiquant ensemble sont formés, chaque étage de pompe (14, 16) présentant un moteur d'entraînement (18, 20) qui entraîne chaque fois une hélice (22, 24) et, les moteurs d'entraînement (18, 20) étant disposés l'un à côté de l'autre à l'intérieur du carter (12), la pompe électrique submersible (10) présentant une ouverture d'aspiration (26) pour un liquide, située dans la zone du premier étage de pompe (16), et une évacuation de liquide (28) à l'extrémité du carter (12) figurant en face de l'ouverture d'aspiration (26),
**caractérisée en ce que**,
entre les étages de pompe (14, 16) et entre les moteurs d'entraînement (18, 20), un canal pour du liquide (30) est formé parallèlement aux axes d'entraînement des hélices (22, 24), qui débouche dans l'évacuation de liquide (28).

2. Pompe électrique submersible selon la revendication 1,
**caractérisée en ce que**
les moteurs d'entraînement (18, 20) sont disposés de façon décalée l'un par rapport à l'autre.

3. Pompe électrique submersible selon la revendication 1 ou 2,
**caractérisée en ce que**
les moteurs d'entraînement (18, 20) sont constitués de façon à pouvoir être branchés indépendamment l'un de l'autre.
